# EUROPÄISCHE PATENTSCHRIFT

(11) **EP 1 161 871 B1**
(45) Veröffentlichungstag und Bekanntmachung des Hinweises auf die Patenterteilung: **13.08.2003**
(21) Anmeldenummer: 01113144.8
(22) Anmeldetag: 30.05.2001
(51) Int. Cl.: A21C 15/04, B26D 3/30

(54) **Vorrichtung zum Schneiden von Backwaren**
Apparatus for cutting baked products
Dispositif pour couper des produits de boulangerie

(30) Priorität: 05.06.2000 DE 20010095 U
(43) Veröffentlichungstag der Anmeldung: 12.12.2001
(73) Patentinhaber: Hegner, Volkmar, 07922 Tanna (DE)
(72) Erfinder: Hegner, Volkmar, 07922 Tanna (DE)
(74) Vertreter: Niestroy, Manfred

(56) Entgegenhaltungen:
- DE-C- 189 792
- DE-C- 601 059
- DE-U- 8 810 763
- US-A- 5 732 610
- US-A- 5 921 163

## Beschreibung

Die Erfindung bezieht sich auf eine Vorrichtung zum Schneiden von Backwaren, bevorzugt zum Ein- oder Durchschneiden von Brötchen, umfassend eine mit einem rotierenden Werkzeug versehene Schneideinrichtung sowie eine Backwarenaufnahmekammer, die auf einer Grundplatte befestigt und zum Zwecke des Schneidvorganges relativ zum rotierenden Werkzeug beweglich ist.

Bei bekannten Vorrichtungen zum Aufschneiden von beispielsweise Brötchen werden diese durch einen Einwurf- bzw. Zuführungsschacht einem rotierenden Messer zugeführt. Durch Verstellung des rotierenden Messers lassen sich Schnittiefe und Schnitthöhe in vorgegebenen Grenzen verändern.

In DE-GM 29621159 U1 wird eine verstellbare Schrägschnittvorrichtung zum Einund Durchschneiden von Brötchen und verwandten Backwaren beschrieben, bei welcher im Zuführungsschacht ein Winkelblech mit einem verstellbaren Scharnier befestigt ist, welches nach einer Skala fixiert werden kann. Somit kann beim Zuführen der Backwaren zu einem rotierenden Messer, das nicht verstellbar ist, ein in seiner Neigung verstellbarer Schrägschnitt erzielt werden.

Dieser und den weiteren bekannten Vorrichtungen haftet der Nachteil an, daß der Größenabweichung der zu schneidenden Backwaren untereinander enge Grenzen gesetzt sind. Darüber hinaus ist die Verletzungsgefahr sehr groß, da die Schneiden der rotierenden Messer freiliegen. Aufgrund der zur Schnittiefen- und Schnitthöhenverstellung vorgenommenen Veränderung der Lage des rotierenden Messers ist das Anbringen von Schutzeinrichtungen, die die Schneide des Messers während des gesamten Schneidvorganges nahezu bedecken, um der Gefahr von Schnittverletzungen bei der bedienenden Person vorzubeugen, oft unmöglich oder zumindest sehr kompliziert.

Hiervon ausgehend liegt der Erfindung die Aufgabe zugrunde, eine Vorrichtung zum Ein- oder Durchschneiden von Backwaren, bevorzugt von Brötchen unterschiedlicher Größe zu entwickeln, bei der die Verletzungsgefahr weitestgehend minimiert ist.

***Diese Aufgabe wird mit einer Vorrichtung der eingangs beschriebenen Art dadurch gelöst, daß***
***die Backwarenaufnahmekammer***
- ***an einem auf einer Grundplatte geführten Gleittisch befestigt ist,***
- ***eine schlitzförmige Öffnung für den Durchgang des rotierenden Werkzeuges aufweist,***
- ***mit einer muldenförmigen Auflagefläche versehen ist, die zur Lagefixierung der Backware in der Backwarenaufnahmekammer dient,***
- ***mit einer Verschlußklappe ausgestattet ist, mit der bei Verschluß der Backwarenaufnahmekammer eine Kraftwirkung auf die Backware ausgeübt wird,***
***das rotierende Werkzeug von einer Schutzeinrichtung umgeben ist, die***
- ***aus zwei zentrisch in der Rotationsachse des Werkzeuges gelagerten und um diese Rotationsachse zueinander verdrehbaren Teilelementen besteht, deren Verdrehung in Abhängigkeit von der Relativbewegung zwischen Werkzeug und Backwarenaufnahmekammer über eine Kurvensteuerung zwangsweise so erfolgt, daß das rotierende Werkzeug stets von den Teilelementen und*/*oder von der Backwarenaufnahmekammer bedeckt ist, und***
***die Kurvensteuerung Führungsstifte und Nuten aufweist, wobei***
- ***jedes Teilelement mit einem Führungsstift ausgestattet ist, die Führungsstifte in eine in die Backwarenaufnahmekammer eingebrachte kurvenförmige Nut eingreifen und die Kurvenform der Nut derart gestaltet ist, daß in jeder Position der Backwarenaufnahmekammer das rotierende Werkzeug von den Teilelementen und*/*oder von der Backwarenaufnahmekammer bedeckt ist.***

Vorteilhafterweise besteht das rotierende Werkzeug dabei aus einem scheibenförmigen Messer mit einer Schneide um den gesamten Umfang.

Nach dem Einlegen der Backware in die Backwarenaufnahmekammer wird diese zunächst in ihrer Lage positioniert. Die muldenförmige Auflagefläche bewirkt dabei eine Kompensation von Maßabweichungen der Backwaren untereinander. Mit dem Verschließen der Backwarenaufnahmekammer mittels der Verschlußklappe erfolgt ein leichtes Andrücken der Backware gegen die muldenförmige Auflagefläche, so daß die Backware während des Schneidvorganges in der Backwarenaufnahmekammer unveränderlich lagefixiert ist.

Nach wunschgemäßer Einstellung des Gleittisches (Neigung) wird dieser gegen das rotierende Werkzeug geführt. Infolge der allseitigen Durchdringung der schlitzförmigen Öffnung durch die Backwarenaufnahmekammer wird ein problemloses Durchschneiden der Backware ermöglicht, da diese nur an Auflagekanten anliegt.

Erfindungsgemäß ist das rotierende Werkzeug von einer Schutzeinrichtung umgeben, bestehend aus zwei zentrisch in der Werkzeugspindel gelagerten sowie zueinander verdrehbaren Teilelementen. Jedes Teilelement hat einen Führungsstift. Diese Führungsstifte greifen in eine in der Backwarenaufnahmekammer eingebrachte kurvenförmig gestaltete Nut ein und bewirken, daß in jeder Position der Backwarenaufnahmekammer, bezogen auf das rotierende Werkzeug, die Umfangsschneide des Werkzeuges von diesen Teilelementen und/oder durch die Backwarenaufnahmekammer schützend bedeckt ist. Damit wird eine Verletzungsgefahr weitestgehend ausgeschlossen.

Bevorzugterweise ist die in Richtung der Backware orientierte Anlagefläche der Verschlußklappe mit elastischen Andruckelementen versehen, die Maßabweichungen bezüglich der Dicke der Backwaren durch elastische Verformung kompensieren.

Die Verschlußklappe ist vorteilhafterweise über Scharniere mit der Backwarenaufnahmekammer verbunden und besitzt zum Zwecke der Arretierung während des geschlossenen Zustandes einen Sicherungshebel, welcher in eine in der Backwarenaufnahmekammer eingebrachte Kontur eingreift. Damit wird zur Vermeidung von Verletzungen ein Eingriff in die Backwarenaufnahmekammer während des Schneidens verhindert.

Wird zusätzlich die Backwarenaufnahmekammer mit einem durch die Bewegung der Verschlußklappe betätigbaren Ein/Aus-Schalter versehen, der elektrisch mit der die Drehbewegung des Werkzeuges erzeugenden Antriebseinheit in Verbindung steht, ist eine Verletzungsgefahr auch schon beim Einlegen der Backware in die Backwarenaufnahmekammer nahezu ausgeschlossen.

In weiteren vorteilhaften Ausgestaltungsvarianten ist der gegen das Werkzeug verschiebbar angeordnete Gleittisch mit zwei Zahnstangen versehen, die jeweils in ein auf der Grundplatte gelagertes Ritzel derart eingreifen, daß der Gleittisch einmal um 90 Grad zur Lage des rotierenden Werkzeuges und zum anderen in Werkzeugrichtung verschoben und entsprechend arretiert werden kann. Durch die Verschiebebewegungen lassen sich sowohl die Schnitthöhe als auch die Schnittiefe entsprechend einstellen.

Zur Veränderung der Schnittneigung, das heißt zum Schwenken der Backwarenaufnahmekammer bzw. des Gleittisches, ist bevorzugterweise der Gleittisch über ein Axiallager mit der Grundplatte verbunden und kann somit problemlos gedreht und mit an sich bekannten Feststellelementen lagefixiert werden.

Eine weitere Möglichkeit der Veränderung der Schnittneigung kann bei entsprechender Ausgestaltung über eine Lageveränderung der Werkzeugspindel vorgenommen werden, wobei diese mit der Grundplatte beispielhaft über ein kardanisches Gelenk verbunden ist.

Durch die einfache Handhabung der Vorrichtung hinsichtlich der Zuführung der Backware, des Schneidvorganges sowie der Verstellmöglichkeiten ist diese nahezu universell dort einsetzbar, wo eine Vielzahl von unterschiedlich zu schneidenden Backwaren, wie beispielsweise im Hotel- und Gastronomiebereich, an Imbißständen u.ä. benötigt werden.

Die erfindungsgemäße Vorrichtung soll nachfolgend anhand des Beispieles einer Vorrichtung zum Ein- oder Durchschneiden von Brötchen näher erläutert werden. In den dazugehörenden Zeichnungen zeigen:
- Fig.1: den prinzipiellen Aufbau der Vorrichtung,
- Fig.2: die schematische Darstellung der Verstellmechanismen

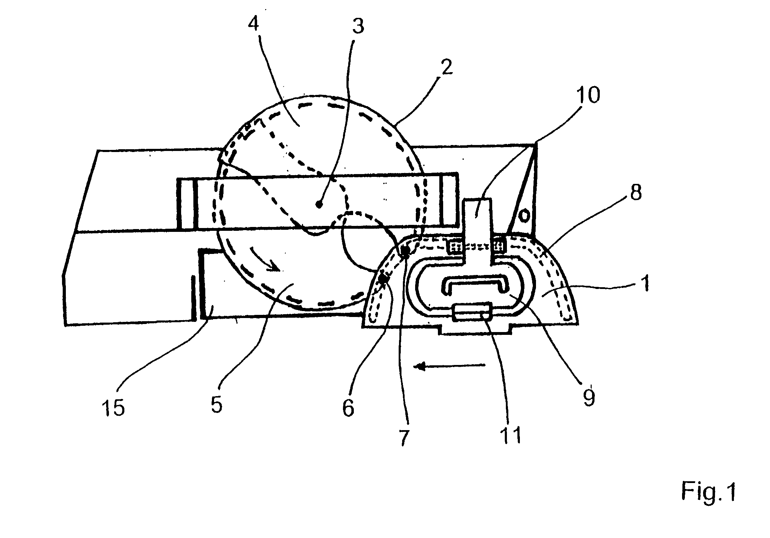

Fig.1 zeigt die erfindungsgemäße Vorrichtung, bestehend aus einer Backwarenaufnahmekammer 1 im verschlossenen Zustand, die gegen ein rotierendes Messer 2 in der durch Pfeil angedeuteten Richtung verschiebbar angeordnet ist, wobei die Relativbewegung über nicht näher dargestellte Anschläge begrenzt ist.

Das rotierende Messer 2 ist von einer zentrisch in der Werkzeugspindel 3 gelagerten Schutzeinrichtung, welche aus zwei zueinander verdrehbaren sowie übereinander angeordneten Teilelementen 4 und 5 besteht, umgeben. Die Teilelemente 4 und 5 besitzen Führungsstifte 6 und 7, die in eine in die Backwarenaufnahmekammer 1 eingearbeitete kurvenförmige Nut 8 eingreifen und bei Bewegung der Backwarenaufnahmekammer 1 in Pfeilrichtung bewirken, daß sich die Teilelemente 4 und 5 auseinander bewegen und dabei einen Bereich der Umfangsschneide des Messers 2 freilegen, der in die Backwarenaufnahmekammer 1 eintritt und den Schneidvorgang vollzieht.

Nach dem Einlegen eines Brötchens in die Backwarenaufnahmekammer 1 wird diese mit einer Verschlußklappe 9 geschlossen und über einen Sicherungshebel 10 mittels einer nicht näher dargestellten Verriegelungseinheit arretiert, wobei die Verschlußklappe 9 über ein Scharnier 11 mit der Backwarenaufnahmekammer 1 verbunden ist.

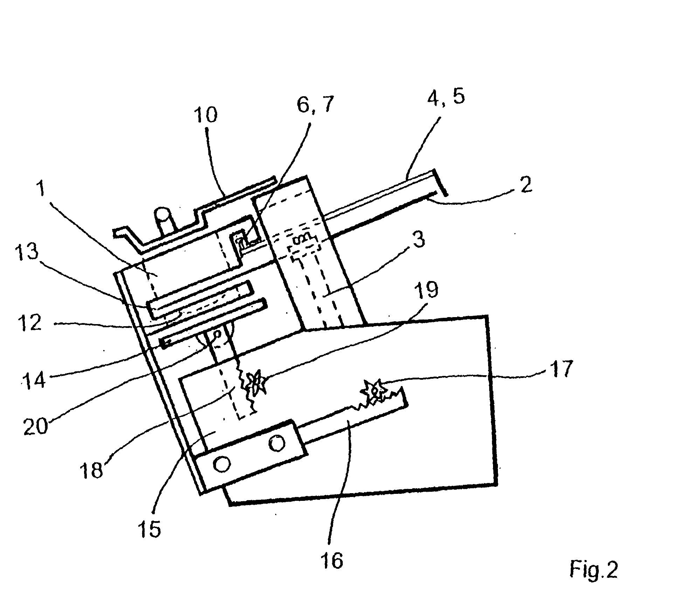

Die Lagepositionierung des Brötchens in der Backwarenaufnahmekammer 1 erfolgt einmal durch die Gestaltung einer muldenförmigen Auflagefläche 12. Zum anderen wird das Brötchen durch die Kanten der zum Zwecke des Schneidvorganges in der Backwarenaufnahmekammer 1 vorhandenen schlitzförmigen Öffnung 13 (vgl. Fig.2), deren Breite kleiner als die Dicke des Brötchens ist und die den Backwarenaufnahmeraum allseitig durchdringt, in seiner Lage relativ zum Werkzeug 2 bestimmt.

Durch Schließen der Backwarenaufnahmekammer 1 mit der Verschlußklappe 9 erfolgt dann die Lagefixierung des Brötchens.

Die Öffnung 13 sowie die Möglichkeiten der Verstellung der Backwarenaufnahmekammer 1 relativ zum Werkzeug 2 ist in Fig.2 schematisch näher dargestellt. Zur Bewegung der Backwarenaufnahmekammer 1 in Richtung des Werkzeuges 2, die sowohl manuell als auch über eine Antriebseinheit möglich ist, ist diese an einem Gleittisch 14, der auf einer Grundplatte 15 zum Werkzeug 2 hin geführt ist, verstellbar befestigt.

Um die Schnittiefe zu verändern bzw. um gegebenenfalls das komplette Durchschneiden des Brötchens zu ermöglichen, befindet sich am Gleittisch 14 eine Zahnstange 16, die in ein auf der Grundplatte 15 gelagertes Ritzel 17 eingreift und somit eine Lageveränderung der Backwarenaufnahmekammer 1 zum Werkzeug 2 hin ermöglicht.

Zur Variierung der Schnitthöhe befindet sich am Gleittisch 14 eine Zahnstange 18, die über ein weiteres auf der Grundplatte 15 gelagertes Ritzel 19 eine Verschiebebewegung um 90 Grad zur Schneidrichtung erlaubt.

Darüber hinaus gestattet die Vorrichtung eine Veränderung der Schnittneigung. Hierzu kann der Gleittisch 14 um eine Lagerachse 20 geschwenkt werden. Die Lagefixierung des Gleittisches 14 über die einzelnen Verstellmechanismen erfolgt mittels an sich bekannter Feststellelemente, die in den Figuren nicht näher dargestellt sind.

## Patentansprüche

1. Vorrichtung zum Schneiden von Backwaren, bevorzugt zum Ein- oder Durchschneiden von Brötchen, umfassend eine Backwarenaufnahmekammer (1) sowie eine mit einem rotierenden Werkzeug (2) versehene Schneideinrichtung, die zum Zwecke des Schneidvorganges relativ zur Backwarenaufnahmekammer (1) beweglich ist, wobei
a. die Backwarenaufnahmekammer (1) an einem auf einer Grundplatte (15) geführten Gleittisch (14) befestigt ist, eine schlitzförmige Öffnung (13) für den Durchgang des rotierenden Werkzeuges (2) aufweist, mit einer muldenförmigen Auflagefläche (12) versehen ist, die zur Lagefixierung der Backware in der Backwarenaufnahmekammer (1) dient, und mit einer Verschlußklappe (9) ausgestattet ist, mit der bei Verschluß der Backwarenaufnahmekammer (1) eine Kraftwirkung auf die Backware ausgeübt wird,
b. das rotierende Werkzeug (2) von einer Schutzeinrichtung umgeben ist, die aus zwei zentrisch in der Rotationsachse (3) des Werkzeuges (2) gelagerten und um diese Rotationsachse (3) zueinander verdrehbaren Teilelementen (4, 5) besteht, deren Verdrehung in Abhängigkeit von der Relativbewegung zwischen Werkzeug (2) und Backwarenaufnahmekammer (1) über eine Kurvensteuerung zwangsweise so erfolgt, daß das rotierende Werkzeug (2) stets von den Teilelementen (4, 5) und/oder von der Backwarenaufnahmekammer (1) bedeckt ist, und
c. die Kurvensteuerung Führungsstifte (6, 7) und Nuten (8) aufweist, wobei jedes Teilelement (4, 5) mit einem Führungsstift (6, 7) ausgestattet ist, die Führungsstifte (6,7) in eine in die Backwarenaufnahmekammer (1) eingebrachte kurvenförmige Nut (8) eingreifen und die Kurvenform der Nut (8) derart gestaltet ist, daß in jeder Position der Backwarenaufnahmekammer (1) das rotierende Werkzeug (2) von den Teilelementen (4, 5) und/oder von der Backwarenaufnahmekammer (1) bedeckt ist.

2. Vorrichtung nach Anspruch 1, **dadurch gekennzeichnet, daß** das rotierende Werkzeug (2) als scheibenförmiges Messer mit einer Umfangsschneide ausgebildet ist.

3. Vorrichtung nach einem der vorgenannten Ansprüche, **dadurch gekennzeichnet, daß** die Verschlußklappe (9) in Richtung der Backware elastische Andruckelemente aufweist.

4. Vorrichtung nach einem der vorgenannten Ansprüche, **dadurch gekennzeichnet, daß** die Verschlußklappe (9) über Scharniere (11) mit der Backwarenaufnahmekammer (1) verbunden ist und ein Sicherungshebel (10) vorhanden ist, welcher zum Zwecke der Arretierung bei Verschluß der Backwarenaufnahmekammer (1) in eine in der Backwarenaufnahmekammer (1) eingebrachte Kontur eingreift.

5. Vorrichtung nach einem der vorgenannten Ansprüche, **dadurch gekennzeichnet, daß** der Gleittisch (14) parallel zur Rotationsachse (3) verschiebbar angeordnet und dabei über eine am Gleittisch (14) befestigte Zahnstange (18), die in ein auf der Grundplatte (15) gelagertes Ritzel (19) eingreift, verstellbar ist, wodurch die Schnitthöhe veränderbar ist.

6. Vorrichtung nach einem der vorgenannten Ansprüche, **dadurch gekennzeichnet, daß** am Gleittisch (14) eine zweite Zahnstange (16) vorgesehen ist, die mit einem zweiten, auf der Grundplatte (15) gelagerten Ritzel (17) in Verbindung steht und mit Betätigung des Ritzels (17) eine Verschiebung des Gleittisches (14) in Werkzeugrichtung erfolgt und dadurch die Schnittiefe veränderbar ist.

7. Vorrichtung nach einem der vorgenannten Ansprüche, **dadurch gekennzeichnet, daß** der Gleittisch (14) in beliebig wählbaren Schwenkpositionen um eine Lagerachse (20) schwenkbar und dadurch die Schnittneigung veränderbar ist.

8. Vorrichtung nach einem der vorgenannten Ansprüche, **dadurch gekennzeichnet, daß** an der Backwarenaufnahmekammer (1) und der Verschlußklappe (9) ein mit der Antriebseinheit für das Werkzeug (2) verbundener Ein/Aus-Schalter angeordnet ist, wobei mit dem Verschließen der Backwarenaufnahmekammer (1) das Einschalten und dem Öffnen der Backwarenaufnahmekammer (1) das Ausschalten erfolgt.

9. Vorrichtung nach einem der vorgenannten Ansprüche, **dadurch gekennzeichnet, daß** die Werkzeugspindel (3) mit der Grundplatte (15) über ein in beliebiger Position arretierbares kardanisches Gelenk verbunden ist.

## Claims

1. Apparatus for cutting bakery products, preferably for cutting into or through bread rolls, including a bakery product receiving chamber (1) and a cutting device, which is provided with a rotating tool (2) and is movable relative to the bakery product receiving chamber (1) for the purpose of the cutting process, wherein
a. the bakery product receiving chamber (1) is secured to a sliding table (14) guided on a base plate (15), affords a slit-shaped opening (13) for the passage of the rotating tool (2), is provided with a trough-shaped engagement surface (12), which serves to fix the bakery product in position in the bakery product receiving chamber (1), and is provided with a closure cap (9), with which a force is exerted on the bakery product, when the bakery product receiving chamber (1) is closed,
b. the rotating tool (2) is surrounded by a protective device, which comprises two components (4, 5), which are mounted centrally on the rotational axis (3) of the tool (2) and are rotatable about this rotational axis (3) with respect to one another, the rotation of which components is constrained to occur in dependence on the relative movement between the tool (2) and bakery product receiving chamber (1) by a cam control so that the rotating tool (2) is always covered by the components (4, 5) and/or by the bakery product receiving chamber (1), and
c. the cam control has guide pegs (6, 7) and grooves (8), each component (4, 5) being provided with a guide peg (6, 7), the guide pegs (6, 7) engaging in an arcuate groove (8) formed in the bakery product receiving chamber (1) and the arcuate shape of the groove (8) being so constructed that the rotating tool (2) is covered by the components (4, 5) and/or by the bakery product receiving chamber (1) in every position of the bakery product receiving chamber (1).

2. Apparatus as claimed in Claim 1, **characterised in that** the rotating tool (2) is constructed in the form of a disc-shaped knife with a peripheral cutting blade.

3. Apparatus as claimed in one of the preceding claims, **characterised in that** the closure cap (9) has elastic pressure elements in the direction of the bakery product.

4. Apparatus as claimed in one of the preceding claims, **characterised in that** the closure cap (9) is connected to the bakery product receiving chamber (1) by means of hinges (11) and a security lever (10) is present, which engages in a contour formed in the bakery product receiving chamber (1), for the purpose of locking, when closing the bakery product receiving chamber (1).

5. Apparatus as claimed in one of the preceding claims, **characterised in that** the sliding table (14) is arranged to be movable parallel to the rotational axis (3) and is movable by means of a rack (18), which is secured to the sliding table (14) and engages with a pinion (19) mounted on the base plate (15), whereby the cutting height may be altered.

6. Apparatus as claimed in one of the preceding claims, **characterised in that** provided on the sliding table (14) there is a second rack (16), which is connected to a second pinion (17) mounted on the base plate (15) and displacement of the sliding table (14) occurs in the tool direction, on actuation of the pinion (17), and the cutting depth may thus be altered.

7. Apparatus as claimed in one of the preceding claims, **characterised in that** the sliding table (14) may be swung into any desired pivotal positions about a bearing axis (20) and the inclination of the cut may thus be altered.

8. Apparatus as claimed in one of the preceding claims, **characterised in that** arranged on the bakery product receiving chamber (1) and the closure cap (9) there is an on-off switch connected to the drive unit for the tool (2), whereby switching on occurs with closing of the bakery product receiving chamber (1) and switching off occurs with opening of the bakery product receiving chamber (1).

9. Apparatus as claimed in one of the preceding claims, **characterised in that** the tool spindle (3) is connected to the base plate (15) by means of a universal coupling, which may be locked in any desired position.

## Revendications

1. Dispositif pour couper des produits de boulangerie, de préférence pour entailler ou ouvrir des petits pains, comprenant une chambre de réception (1) des produits de boulangerie ainsi qu'un dispositif de coupe pourvu d'un outil (2) rotatif, lequel est déplaçable par rapport à la chambre de réception (1) des produits de boulangerie en vue de l'opération de coupe, dans lequel
a. la chambre de réception (1) des produits de boulangerie est fixée sur une table glissante (14) guidée sur une plaque de base (15), présente une ouverture (13) en forme de fente pour le passage de l'outil (2) rotatif, est pourvue d'une surface de support (12) en forme d'auge qui sert à immobiliser le produit de boulangerie dans la chambre de réception (1), et est équipée d'un clapet de fermeture (9) au moyen duquel, à la fermeture de la chambre de réception (1), une force agit sur le produit de boulangerie,
b. l'outil (2) rotatif est entouré par un dispositif de protection qui est constitué de deux éléments (4, 5) montés centrés dans l'axe de rotation (3) de l'outil (2) et pouvant tourner l'un par rapport à l'autre autour de cet axe de rotation (3), dont la rotation s'effectue à force, par une commande à cames, en fonction du mouvement relatif entre l'outil (2) et la chambre de réception (1) des produits de boulangerie, de manière que l'outil (2) rotatif soit toujours recouvert par les éléments (4, 5) et/ou par la chambre de réception (1) des produits de boulangerie, et
c. la commande à cames comporte des broches de guidage (6, 7) et des rainures (8), chaque élément partiel (4, 5) étant équipé d'une broche de guidage (6, 7), les têtons de guidage (6, 7) s'engageant dans une rainure (8) en forme de courbe pratiquée dans la chambre de réception (1) des produits de boulangerie et la forme en courbe de la rainure (8) étant telle que dans chaque position de la chambre de réception (1) des produits de boulangerie, l'outil (2) rotatif soit recouvert par les éléments (4, 5) et/ou par la chambre de réception (1) des produits de boulangerie.

2. Dispositif selon la revendication 1, **caractérisé en ce que** l'outil (2) rotatif est réalisé sous la forme d'un couteau en forme de disque avec un tranchant périphérique.

3. Dispositif selon l'une des revendications précédentes, **caractérisé en ce que** le clapet de fermeture (9) comporte des éléments de pression élastiques dans la direction du produit de boulangerie.

4. Dispositif selon l'une des revendications précédentes, **caractérisé en ce que** le clapet de fermeture (9) est relié par des charnières (11) à la chambre de réception (1) des produits de boulangerie et **en ce qu'**il est prévu un levier de sécurité (10) qui s'engage dans un contour pratiqué dans la chambre de réception (1) des produits de boulangerie, en vue du verrouillage à la fermeture de la chambre de réception (1) des produits de boulangerie.

5. Dispositif selon l'une des revendications précédentes, **caractérisé en ce que** la table glissante (14) est disposée de manière à pouvoir coulisser parallèlement à l'axe de rotation (3) et est réglable au moyen d'une crémaillère (18) qui est fixée sur la table glissante (14) et qui s'engage dans un pignon (19) monté sur la plaque de base (15), ce qui a pour effet de faire varier la hauteur de coupe.

6. Dispositif selon l'une des revendications précédentes, **caractérisé en ce que** sur la table glissante (14) est prévue une deuxième crémaillère (16) qui est en liaison avec un deuxième pignon (17) monté sur la plaque de base (15), et **en ce que** par actionnement du pignon (17) il se produit un coulissement de la table glissante (14) dans la direction de l'outil, ce qui a pour effet de modifier la profondeur de coupe.

7. Dispositif selon l'une des revendications précédentes, **caractérisé en ce que** la table glissante (14) peut pivoter dans des positions de pivotement à sélectionner de manière quelconque autour d'un axe de palier (20), ce qui a pour effet de faire varier l'inclinaison de coupe.

8. Dispositif selon l'une des revendications précédentes, **caractérisé en ce que** sur la chambre de réception (1) des produits de boulangerie et le clapet de fermeture (9) est disposé un interrupteur marche/arrêt relié à l'unité d'entraînement de l'outil (2), la fermeture de la chambre de réception (1) des produits de boulangerie provoquant la mise en marche, et l'ouverture de la chambre de réception (1) provoquant la mise à l'arrêt.

9. Dispositif selon l'une des revendications précédentes, **caractérisé en ce que** la broche d'outil (3) est reliée à la plaque de base (15) par un joint de cardan pouvant être bloqué dans n'importe quelle position.
